# EUROPEAN PATENT SPECIFICATION

(11) **EP 1 687 783 B1**
(45) Date of publication and mention of the grant of the patent: **11.05.2011**
(21) Application number: 04820349.1
(22) Date of filing: 22.10.2004
(51) Int. Cl.: G08B 3/10, H04M 19/04

(54) **METHOD AND DEVICE FOR GENERATING AN ALERT SIGNAL BASED ON A SOUND METRIC FOR A NOISE SIGNAL**
VERFAHREN UND EINRICHTUNG ZUR ERZEUGUNG EINES WARNSIGNALS AUF DER BASIS EINER SCHALLMETRIK FÜR EIN RAUSCHSIGNAL
PROCEDE ET DISPOSITIF DE GENERATION D'UN SIGNAL D'ALERTE REPOSANT SUR UNE METRIQUE SONORE POUR SIGNAL DE BRUIT

(30) Priority: 26.11.2003 US 723776
(43) Date of publication of application: 09.08.2006
(73) Proprietor: Sony Ericsson Mobile Communications AB, 221 88 Lund (SE)
(72) Inventor: VANEPPS, Daniel J., Jr., Apex, North Carolina 27502 (US); EATON, William Chris, Cary, North Carolina 27519 (US)
(74) Representative: Chamberlain, Alan James
(86) International application number: PCT/US2004/035322
(87) International publication number: WO 2005/057512

(56) References cited:
- EP-A- 1 047 258
- WO-A-97/16932
- GB-A- 2 358 553
- US-A- 5 848 384

## Description

### BACKGROUND OF THE INVENTION

The present invention relates to signal processing technology, and, more particularly, to methods, electronic devices, and computer program products for generating an alert signal for an electronic device.

Electronic devices, such as mobile terminals, typically have an alert signal to notify the user when an incoming communication, such as a call, arrives. Because electronic devices may be used in a variety of environments, some of which may be relatively noisy and some of which may be relatively quiet, an audible alert signal may not always have an appropriate loudness level or volume. One approach is to use a vibration mechanism as an alert signal instead of an audible notification. Unfortunately, a vibration mechanism typically only works if the electronic device is on or in relatively close proximity to the user's body.

GB2358553 discloses the generation of alert signals according to the ambient conditions.

### SUMMARY

According to some embodiments of the present invention, an electronic device is operated by receiving a noise signal and generating a sound metric for the noise signal. An alert signal is generated that is based on the sound metric.

In other embodiments of the present invention, the alert signal may be generated so as to have a spectral composition that is based on the sound metric.

In other embodiments of the present invention, the sound metric is a loudness profile and the sound metric may be generated by performing a Fourier transform on the noise signal to obtain a frequency domain representation of the noise signal. A distribution of sone/bark- versus bark for the frequency domain representation of the noise signal may be calculated using an ISO 532B loudness calculation method. An overall loudness may be determined for the noise signal and a loudness in at least one critical band for the noise signal may be determined based on the distribution of sones/bark versus bark. The loudness profile may be the overall loudness of the noise signal and the loudness in at least one critical band.

In still other embodiments of the present invention, the alert signal may be generated by determining a power value for the alert signal based on the loudness profile for the noise signal. A transfer function may determined for an alert signal transmit filter based on the loudness profile for the noise signal. The alert signal may be transmitted at the power value using the alert signal transmit filter.

In further embodiments of the present invention, the sound metric is a loudness profile and a sharpness profile.

In still further embodiments of the present invention, the noise signal is received responsive to receiving an incoming communication at the electronic device.

In still further embodiments of the present invention, an incoming communication is received at the electronic device after receiving the noise signal and generating the sound metric for the noise signal. The alert signal is generated responsive to receiving the incoming communication.

In still further embodiments of the present invention, the electronic device is a mobile terminal.

In other embodiments of the present invention, a plurality of alert profiles may be provided and a user may select one of the plurality of alert profiles. An alert signal may be generated that is based on the selected one of the plurality of alert profiles.

In still other embodiments of the present invention, a plurality of alert profiles may be provided and a noise signal may be received. One of the plurality of profiles may be selected responsive to receiving the noise signal. An alert signal may be generated based on the selected one of the plurality of alert profiles.

Although described above primarily with respect to method aspects of the present invention, it will be understood that the present invention may be embodied as methods, electronic devices, and/or computer program products.

### BRIEF DESCRIPTION OF THE DRAWINGS

Other features of the present invention will be more readily understood from the following detailed description of specific embodiments thereof when read in conjunction with the accompanying drawings, in which:
**FIG. 1** is a block diagram that illustrates a mobile terminal in accordance with some embodiments of the present invention;
**FIG. 2** is a block diagram that illustrates a signal processor that may be used in electronic devices, such as the mobile terminal of **FIG. 1****,** in accordance with some embodiments of the present invention; and
**FIGS. 3** and **4** are flowcharts that illustrate operations for generating an alert signal in accordance with some embodiments of the present invention;
**FIG. 5** is a graph that illustrates a loudness of an ambient noise signal in accordance with some embodiments of the present invention; and
**FIG. 6** is a flowchart that illustrates operations for generating an alert signal in accordance with some embodiments of the present invention.

### DETAILED DESCRIPTION

While the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention as defined by the claims. Like reference numbers signify like elements throughout the description of the figures. It should be further understood that the terms "comprises" and/or "comprising" when used in this specification are taken to specify the presence of stated features, integers, steps, operations, elements, and/or components, but do not preclude the presence or addition of one or more other features, integers, steps, operations, elements, components, and/or groups thereof.

The present invention may be embodied as methods, electronic devices, and/or computer program products. Accordingly, the present invention may be embodied in hardware and/or in software (including firmware, resident software, micro-code, etc.). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and/or a compact disc read-only memory (CD-ROM). Note that the computer-usable or computer-readable medium could even be paper or another suitable medium upon which the program is printed, as the program can be electronically captured, via, for instance, optical scanning of the paper or other medium, then compiled, interpreted, or otherwise processed in a suitable manner, if necessary, and then stored in a computer memory.

The present invention is described herein in the context of generating an alert signal in a mobile terminal. It will be understood, however, that the present invention may be embodied in other types of electronic devices that use an alert signal or mechanism to notify a user of an event, such as an incoming call, communication, or a scheduled event. Moreover, as used herein, the term "mobile terminal" may include a satellite or cellular radiotelephone with or without a multi-line display; a Personal Communications System (PCS) terminal that may combine a cellular radiotelephone with data processing, facsimile and data communications capabilities; a PDA that can include a radiotelephone, pager, Internet/intranet access, Web browser, organizer, calendar and/or a global positioning system (GPS) receiver; and a conventional laptop and/or palmtop receiver or other appliance that includes a radiotelephone transceiver.

Mobile terminals may also be referred to as "pervasive computing" devices.

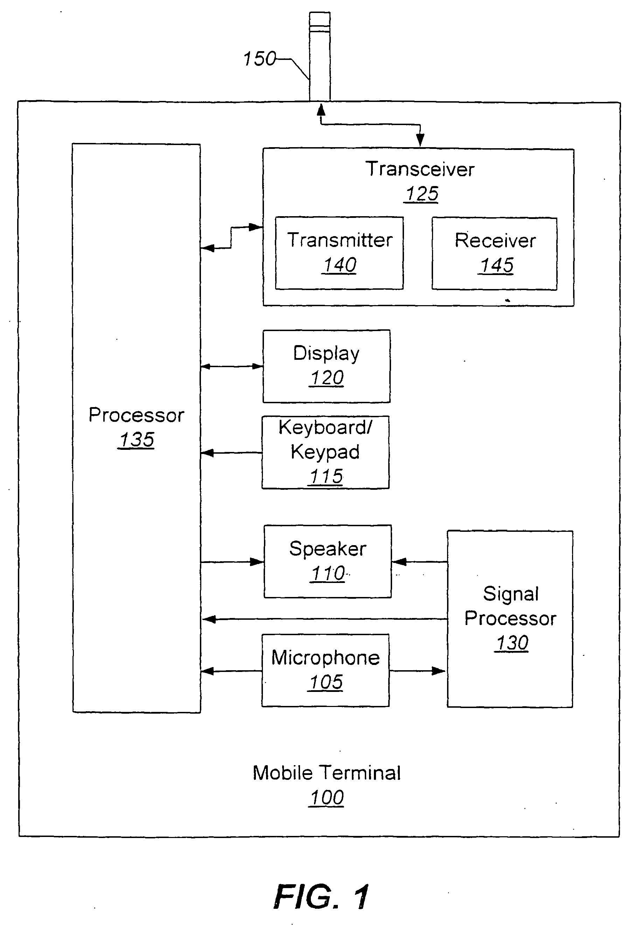

Referring now to **FIG. 1****,** an exemplary mobile terminal 100, in accordance with some embodiments of the present invention, includes a microphone 105, a speaker **110,** a keyboard/keypad **115,** a display **120,** a transceiver **125,** and a signal processor **130** that communicate with a processor **135.** The microphone **105** may represent a single microphone or may represent multiple microphones. The transceiver **125** includes a transmitter circuit **140** and a receiver circuit **145,** which, respectively, transmit outgoing radio frequency signals to, for example, base station transceivers and receive incoming radio frequency signals from, for example, the base station transceivers via an antenna **150.** The radio frequency signals transmitted between the mobile terminal **100** and the base station transceivers may comprise both traffic and control signals (e.g., paging signals/messages for incoming calls), which are used to establish and maintain communication with another party or destination. The radio frequency signals may also comprise packet data information, such as, for example, cellular digital packet data (CDPD) information. The foregoing components of the mobile terminal **100,** without the capabilities of the present invention, may be included in many conventional mobile terminals and their functionality, with respect to such conventional operations, is generally known to those skilled in the art.

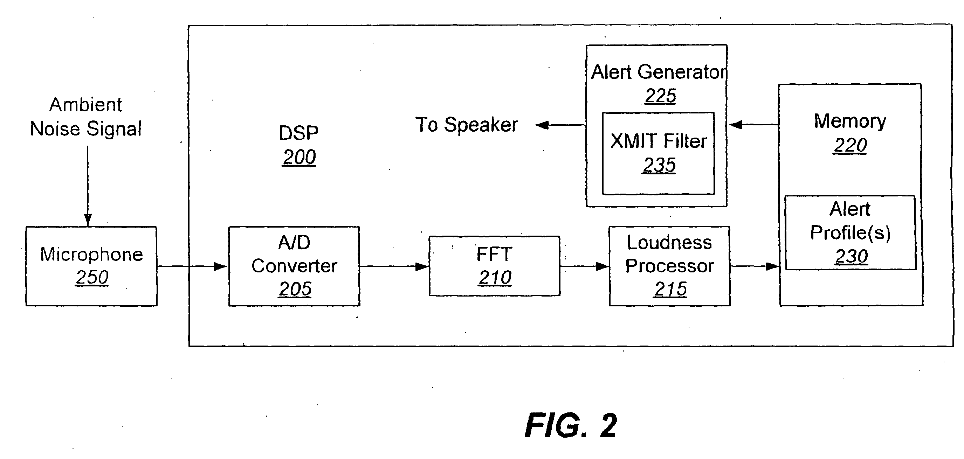

As shown in **FIG. 1****,** the mobile terminal **100** includes a signal processor **130** that is responsive to ambient noise signal received through the microphone **105** and is configured to generate an alert signal that has a spectral composition that is based on a sound metric determined for the ambient noise signal. As used herein, spectral composition means frequency spectrum and/or power level. Any background noise picked up by the microphone **105** may be considered noise and/or a particular signal, which may be generated by a particular source, may be identified as noise. In accordance with some embodiments of the present invention, the signal processor **130** may be configured to determine a loudness profile for the ambient noise signal that includes an overall loudness measure for the noise signal along with a loudness measure of the noise signal in one or more critical bands. For example, sounds that compete for the same nerve endings on the basilar membrane of the inner ear may be considered to be in the same critical band. Generally, a critical band may be about 90 Hz wide for sounds having frequencies below 200 Hz and about 900 Hz wide for sounds having frequencies around 5000 Hz. Based on this loudness profile, the signal processor **130** may be configured to determine a power value for the alert signal and to determine a transfer function for an alert signal transmit filter. Determining the transfer function may comprise selecting coefficients for the alert signal transfer filter. The alert signal may then be transmitted using the alert signal transmit filter. A signal processor that may be used to implement the signal processor. **130,** in accordance with some embodiments of the present invention, will now be described with respect to **FIG. 2****.**

As shown in **FIG. 2****,** a digital signal processor (DSP) 200, in accordance with some embodiments of the present invention, includes an analog-to-digital (A/D) converter **205,** a fast-Fourier transform (FFT) module **210,** a sound metric processor **215,** a memory **220,** and an alert generator **225.** The A/D converter 205 may be configured to convert an analog ambient noise signal received from, for example, one or more microphones **250,** to a sequence of digital samples. The FFT module **210** may be configured to perform a Fourier transform on the digital samples of the ambient noise signal so as to obtain a frequency domain representation of the ambient noise signal, The sound metric processor **215** may be configured to generate a loudness profile for the ambient noise signal that includes an overall loudness measure for the noise signal along with a loudness measure of the noise signal in one or more critical bands based on the frequency domain representation of the ambient noise signal.

In some embodiments of the present invention, the loudness processor may be configured to generate a sharpness profile for the ambient noise signal based on the frequency domain representation of the ambient noise signal. Sharpness is defined as the ratio of high frequency loudness to overall loudness. Generation of the loudness profile and the sharpness profile by the sound metric processor **215** will be described in greater detail below.

The loudness profile and/or the sharpness profile may be stored in the memory **220** as alert profile(s) **230.** The alert generator **225** may be configured to access the alert profile(s) 230 in the memory **220** and to use the alert profile(s) to determine a power value for the alert signal and a transfer function for an alert signal transmit filter **235.** The alert generator **225** may transmit the alert signal through, for example, the speaker **110** of **FIG. 1****,** by using the alert signal transmit filter **235** so that the alert signal's loudness exceeds the ambient noise loudness in selected frequency bands, such as those that are more relevant to human hearing. In some embodiments, the alert signal's loudness may be made to exceed the ambient noise signal's loudness across the entirety of the audible spectrum. According to some embodiments of the present invention, an alert signal can be generated in a certain frequency spectrum or range in which the loudness of the ambient noise signal is relatively low. Thus, according to some embodiments of the present invention, the frequency spectrum of the alert signal may be determined based on the loudness profile and/or sharpness profile of the noise signal, the power level of the alert signal may be determined based on the loudness profile and/or sharpness profile of the noise signal, or both the frequency spectrum and the power level of the alert signal may be determined based on the loudness profile and/or the sharpness profile of the noise signal.

Although **FIG. 2** illustrates an exemplary software and/or hardware ) architecture of a signal processor that may be used to generate an alert signal in an electronic device, such as a mobile terminal, it will be understood that the present invention is not limited to such a configuration but is intended to encompass any configuration capable of carrying out the operations described herein. Moreover, computer program code for carrying out operations of the modules comprising the DSP 200 discussed above may be written in a high-level programming language, such as C or C++, for development convenience. Computer program code for carrying out operations of the present invention may also be written in other programming languages, such as, but not limited to, interpreted languages. Some modules or routines may be written in assembly language or even micro-code to enhance ) performance and/or memory usage. It will be further appreciated that the functionality of any or all of the program and/or processing modules of the DSP **200** may also be implemented using discrete hardware components, one or more application specific integrated circuits (ASICs), or a microcontroller.

The present invention is described hereinafter with reference to flowchart and/or block diagram illustrations of methods, electronic devices, and computer program products in accordance with some embodiments of the invention. These flowchart and/or block diagrams further illustrate exemplary operations of the mobile terminal and signal processor architectures of **FIGS. 1** and **2****.** It will be understood that each block of the flowchart and/or block diagram illustrations, and combinations ) of blocks in the flowchart and/or block diagram illustrations, may be implemented by computer program instructions and/or hardware operations. These computer program instructions may be provided to a processor of a general purpose computer, a special purpose computer, or other programmable data processing apparatus to produce a machine, such that the instructions, which execute via the processor of the computer or other programmable data processing apparatus, create means for implementing the functions or acts specified in the flowchart and/or block diagram block or blocks.

These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function or act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions or acts specified in the flowchart and/or block diagram block or blocks.

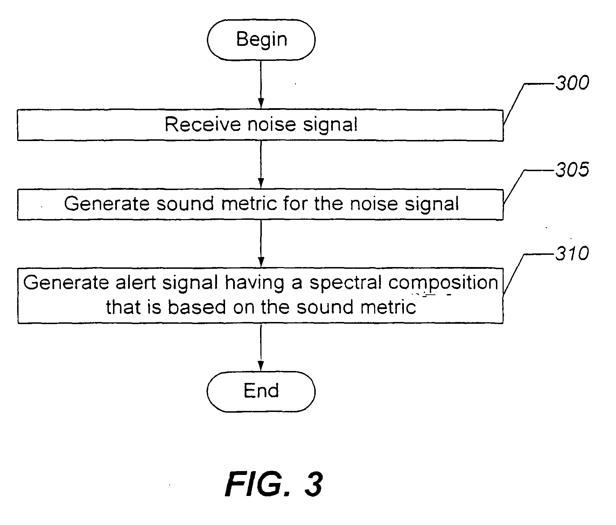

Referring now to **FIG. 3****,** operations begin at block **300** where the microphone **100** of **FIG. 1****,** for example, receives an ambient noise signal. At block 305, the sound metric processor **215** of **FIG. 2****,** for example, may generate a sound metric for the noise signal. The alert generator **225** of **FIG. 2****,** for example, may then generate an alert signal that has a spectral composition that is based on the sound metric at block **310.** In accordance with some embodiments of the present invention, the ambient noise signal may be received and a sound metric may be generated for the ambient noise signal, which may then be saved as an alert profile **230** in the memory **220** as discussed above with respect to **FIG. 2****.** When an incoming communication is received by the mobile terminal or electronic device, the alert signal may be generated based on a previously stored alert profile **230.**

In accordance with some embodiments of the present invention, various alert profiles **230** may be stored in the memory **220,** which corresponds to various types of environments, such as, for example, an office environment, an arena environment, an automobile environment, a home environment, etc. When an incoming communication is received by the mobile terminal or electronic device, the sound metric processor **215** may analyze the loudness of the ambient noise signal and identify one of the previously stored alert profiles **230** for the alert generator **225** to use in generating the alert signal.

In accordance with some embodiments of the present invention, various alert profiles **230** may be stored in the memory **220,** which correspond to various types of environments as discussed above. A user may then select a particular alert profile for the alert generator **225** to use in generating the alert signal. In these embodiments, the sound metric processor need not perform an analysis of the ambient noise level when an incoming communication or event is received. In addition to such factors as external environment, the alert profiles **230** may also be tailored to the preferences of a particular user and may take into account, for example, the user's hearing ability, how the user holds the electronic device, and/or where the electronic device is kept relative to the user.

In other embodiments of the present invention, the ambient noise signal may be received, a sound metric generated therefore, and an alert signal generated that is based on the sound metric in response to receiving an incoming communication at the mobile terminal or electronic device. That is, an alert signal loudness may be adjusted dynamically in response to an incoming communication in accordance with some embodiments of the present invention.

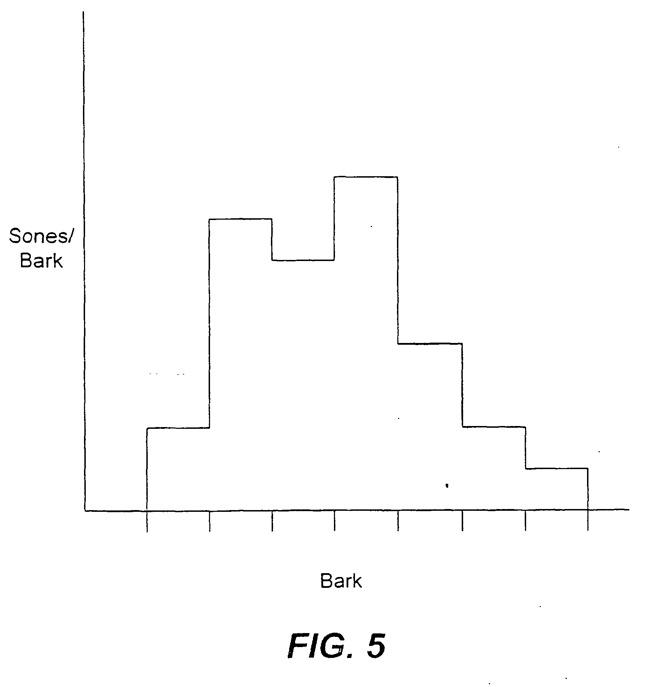

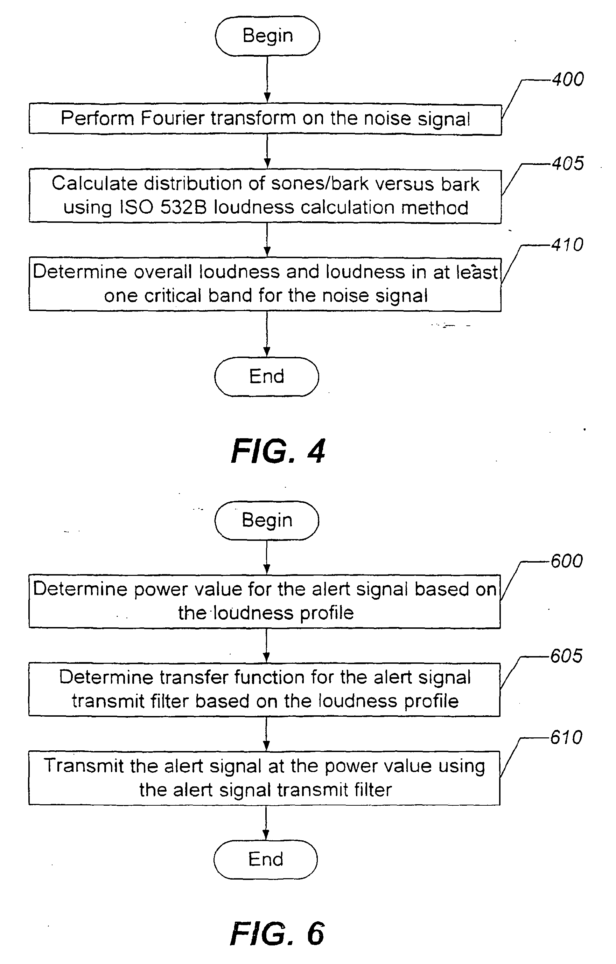

Referring now to **FIG. 4****,** operations for generating a sound metric, in accordance with some embodiments of the present invention, will now be described. Operations begin at block **400** where the FFT module 210 of **FIG. 2****,** for example, performs a Fourier transform on the ambient noise signal. The sound metric processor **215,** for example, may then calculate the distribution of sones/bark versus bark using the ISO 532B loudness calculation method at block **405.** Calculation of the ISO **532B** loudness is described in the Deutsches Institut für Normung E.V. (DIN) 45631 Standard entitled "Procedure For Calculating Loudness Level And Loudness," the disclosure of which is hereby incorporated herein by reference. **FIG. 5** illustrates an exemplary distribution of sones/bark versus bark for am ambient noise signal. At block **410,** the sound metric processor **215** may determine an overall loudness and the loudness in one or more critical bands for the ambient noise signal. The overall loudness may be determined by calculating the area under the curve in **FIG. 5****.** In other embodiments of the present invention, the sound metric processor **215** may determine a sharpness for the ambient noise signal as discussed above. The overall loudness along with the loudness in one or more critical bands for the ambient noise signal may define a loudness profile, which may be stored as an alert profile **230** in the memory **220** of **FIG. 2****.**

Referring now to **FIG. 6****,** operations for generating an alert signal, in accordance with some embodiments of the present invention, will now be described. Operations begin at block **600** where the alert generator **225** of **FIG. 2****,** for example, determines a power value for the alert signal based on the loudness profile for the ambient noise signal. The alert generator **225** may determine the transfer function for the alert signal transmit filter **235** at block **605** based on the loudness profile. At block **610,** the alert generator **225** may transmit the alert signal at the power value using the alert signal transmit filter **235,** which, advantageously, may allow the alert signal's loudness to exceed the ambient noise loudness in selected frequency bands that are, for example, more relevant to human hearing. As discussed above, however, the alert signal may be generated to have a loudness that exceeds the loudness of the noise signal across the entirety of the audible spectrum in some embodiments of the present invention. Moreover, the present invention may allow the power level and/or the frequency spectrum to be set so to improve the likelihood that the user can hear the alert signal over the ambient noise in the environment. In some embodiments, this may involve setting the frequency of the alert signal to a frequency band where the ambient noise loudness is relatively low based on the sound metric of the noise signal. In other embodiments, this may involve shifting the frequency of the alert signal to a frequency band where the ambient noise loudness is relatively low while also adjusting a power level of the alert signal based on the sound metric of the noise signal. In still other embodiments of the present invention, the power level of the alert signal may be adjusted based on the sound metric of the noise signal.

According to some embodiments of the present invention, an alert signal can be generated in a certain frequency spectrum or range in which the loudness of the ambient noise signal is relatively low. Thus, according to some embodiments of the present invention, the frequency spectrum of the alert signal may be determined based on the loudness profile and/or sharpness profile of the noise signal, the power level of the alert signal may be determined based on the loudness profile and/or sharpness profile of the noise signal, or both the frequency spectrum and the power level of the alert signal may be determined based on the loudness profile and/or the sharpness profile of the noise signal.

In accordance with some embodiments of the present invention, the loudness profiles and/or sharpness profiles generated by the sound metric processor **215** may be used by the processor **135** and/or transceiver **125** of **FIG. 1** to facilitate, for example, generation of filter coefficients for such functions as received signal equalization and/or echo suppression.

The flowcharts of **FIGS. 3****,** **4,** and 6 illustrate the architecture, functionality, and operations of the mobile terminal 100 and **DSP 200** hardware and/or software according to some embodiments of the present invention. In this regard, each block represent a module, segment, or portion of code, which comprises one or more executable instructions for implementing the specified logical function(s) or act(s). It should also be noted that in other implementations, the function(s) or act(s) noted in the blocks may occur out of the order noted in **FIG. 3****,** **4,** and **6****.** For example, two blocks shown in succession may, in fact, be executed substantially concurrently or the blocks may sometimes be executed in the reverse order, depending on the operations involved.

Many variations and modifications can be made to the embodiments described above without substantially departing from the principles of the present invention. All such variations and modifications are intended to be included herein within the scope of the present invention, as set forth in the following claims.

## Claims

1. A method of operating an electronic device, comprising:
receiving a noise signal (300);
**characterised in that** the method comprises:
performing a Fourier transform on the noise signal to obtain a frequency domain representation of the noise signal (400);
generating a sound metric for the noise signal, the sound metric being a loudness profile (305);
calculating a distribution of sones/bark versus bark for the frequency domain representation of the noise signal using an ISO 532B loudness calculation method (405);
determining an overall loudness for the noise signal and a loudness in at least one critical band for the noise signal based on the distribution of sones/bark versus bark, the loudness profile comprising the overall loudness of the noise signal and the loudness in at least one critical band (410); and
generating an alert signal based on the sound metric (310).

2. The method of Claim 1, wherein generating the alert signal (310) comprises:
generating the alert signal having a spectra 1 composition that is based on the sound metric.

3. The method of Claim 1, wherein generating the alert signal (310) comprises:
determining a power value for the alert signal based on the loudness profile for the noise signal (600);
determining a transfer function for an alert signal transmit filter based on the loudness profile for the noise signal (605); and
transmitting the alert signal at the power value using the alert signal transmit filter (610).

4. The method of Claim 3, wherein determining the transfer function for the alert signal transmit filter (605) comprises:
selecting coefficients for the alert signal transmit filter.

5. The method of Claim 1, wherein the sound metric comprises a loudness profile and/or a sharpness profile.

6. The method of Claim 1, further comprising:
receiving an incoming communication and/or scheduled event at the electronic device; and
wherein receiving the noise signal (300) comprises receiving the noise signal responsive to receiving the incoming communication.

7. The method of Claim 1, further comprising:
receiving an incoming communication at the electronic device after receiving the noise signal and generating the sound metric for the noise signal; and
wherein generating the alert signal (310) comprises generating the alert signal having the spectral composition that is based on the sound metric responsive to receiving the incoming communication.

8. The method of Claim 1, wherein the electronic device is a mobile terminal.

9. A method of operating an electronic device, comprising:
providing a plurality of alert profiles, each of the alert profiles being generated to have a spectral composition based on a noise signal sound metric associated with an ambient noise environment;
receiving a user selection of one of the plurality of alert profiles; and
generating an alert signal that is based on the selected one of the plurality of alert profiles.

10. The method of Claim 9, wherein generating the alert signal comprises generating the alert signal having a spectral composition that is based on the selected one of the plurality of alert profiles.

11. The method of Claim 9, wherein generating the alert signal comprises:
determining a power value for the alert signal based on the selected one of the plurality of alert profiles for the noise signal;
determining a transfer function for an alert signal transmit filter the selected one of the plurality of alert profiles for the noise signal; and
transmitting the alert signal at the power value using the alert signal transmit filter.

12. A method of operating an electronic device, comprising:
providing a plurality of alert profiles; then
receiving a noise signal (300);
selecting one of the plurality of alert profiles responsive to receiving the noise signal; and
generating an alert signal that is based on the selected one of the plurality of alert profiles.

13. The method of Claim 12, wherein generating the alert signal comprises generating the alert signal having a spectral composition that is based on the selected one of the plurality of alert profiles.

14. The method of Claim 12, wherein generating the alert signal comprises:
determining a power value for the alert signal based on the selected one of the plurality of alert profiles for the noise signal;
determining a transfer function for an alert signal transmit filter the selected one of the plurality of alert profiles for the noise signal; and
transmitting the alert signal at the power value using the alert signal transmit filter.

15. An electronic device (100), comprising:
a receiver (105; 250) that is configured to receive a noise signal;
**characterised in that** the electronic device further comprises:
a Fourier transform module (210) that is configured to obtain a frequency domain representation of the noise signal;
a sound metric processor (215) that is configured to generate a sound metric for the noise signal, the sound metric being a loudness profile, the sound metric processor (215) being further configured to calculate a distribution of sones/bark versus bark for the frequency domain representation of the noise signal using an ISO 532B loudness calculation method and to determine an overall loudness far the noise signal and a loudness in at least one critical band for the noise signal based on the distribution of sones/bark versus bark, the loudness profile comprising the overall loudness of the noise signal and the loudness in at least one critical band;
an alert generator (225) that is configured to generate an alert signal that is based on the sound metric.

16. The electronic device (100) of Claim 15, where the alert generator (225) is further configured to generate an alert signal having a spectral composition that is based on the sound metric.

17. The electronic device (100) of Claim 15 wherein the alert generator (225) further comprises an alert signal transmit filter (235) and wherein the alert generator (225) is further configured to determine a power value for the alert signal based on the loudness profile for the noise signal, determine a transfer function for the alert signal transmit filter based on the loudness profile for the noise signal, and transmit the alert signal at the power value using the alert signal transmit filter.

18. The electronic device (100) of Claim 17, wherein the alert generator (225) is further configured to select coefficients for the alert signal transmit filter.

19. The electronic device (100) of Claim 15, wherein the sound metric comprises a loudness profile and a sharpness profile.

20. The electronic device (100) of Claim 15, wherein the electronic device (100) is a mobile terminal.

21. An electronic device (100), comprising:
means (220) for providing a plurality of alert profiles (230), each of the alert profiles being generated to have a spectral composition based on a noise signal sound metric associated with an ambient noise environment;
means (115) for receiving a user selection of one of the plurality of alert profiles (230); and
means (135) for generating an alert signal that is based on the selected one of the plurality of alert profiles (230).

22. An electronic device (100), comprising:
means (220) for providing a plurality of alert profiles (230);
means (105, 250) for receiving a noise signal;
means (135) for selecting one of the plurality of alert profiles (230) responsive to receiving the noise signal; and
means (135) for generating an alert signal that is based on the selected one of the plurality of alert profiles (230).

23. A computer program product for operating an electronic device, comprising:
a computer readable storage medium having computer readable program code embodied therein, the computer readable program code comprising:
computer readable program code configured to receive a noise signal;
**characterised in that** the computer readable program code further comprises;
computer readable program code configured to perform a Fourier transform on the noise signal to obtain a frequency domain representation of the noise signal;
computer readable program code configured to generate a sound metric for the noise signal, the sound metric being a loudness profile;
computer readable program code configured to calculate a distribution of sones/bark versus bark for the frequency domain representation of the noise signal using an ISO 532B loudness calculation method;
computer readable program code configured to determine an overall loudness for the noise signal and a loudness in at least one critical band for the noise signal based on the distribution of sones/bark versus bark, the loudness profile comprising the overall loudness of the noise signal and the loudness in at least one critical band; and
computer readable program code configured to generate an alert signal based on the sound metric.

24. The computer program product of Claim 23, wherein the computer readable program code configured to generate the alert signal comprises:
computer readable program code configured to generate the alert signal having a spectral composition that is based on the sound metric.

25. The computer program product of Claim 23, wherein the computer readable program code configured to generate the alert signal comprises:
computer readable program code configured to determine a power value for the alert signal based on the loudness profile for the noise signal;
computer readable program code configured to determine a transfer function for an alert signal transmit filter based on the loudness profile for the noise signal; and
computer readable program code configured to transmit the alert signal at the power value using the alert signal transmit filter.

26. A computer program product for operating an electronic device, comprising:
a computer readable storage medium having computer readable program code embodied therein, the computer readable program code comprising:
computer readable program code configured to provide a plurality of alert profiles, each of the alert profiles being generated to have a spectral composition based on a noise signal sound metric associated with an ambient noise environment;
computer readable program code configured to receive a user selection of one of the plurality of alert profiles; and
computer readable program code configured to generate an alert signal that is based on the selected one of the plurality of alert profiles.

27. A computer program product for operating an electronic device, comprising:
a computer readable storage medium having computer readable program code embodied therein, the computer readable program code comprising:
computer readable program code configured to provide a plurality of alert profiles;
computer readable program code configured to receive a noise signal;
computer readable program code configured to select one of the plurality of alert profiles responsive to receiving the noise signal; and
computer readable program code configured to generate an alert signal that is based on the selected one of the plurality of alert profiles.

## Patentansprüche

1. Verfahren zum Betreiben einer elektronischen Vorrichtung, umfassend:
das Empfangen (300) eines Rauschsignals;
**dadurch gekennzeichnet, dass** das Verfahren umfasst:
das Fouriertransformieren (400) des Rauschsignals, damit man eine Frequenzbereichsdarstellung des Rauschsignals erhält;
das Erzeugen (305) einer Klangmetrik für das Rauschsignal, wobei die Klangmetrik ein Lautstärkeprofil ist;
das Berechnen (405) einer Verteilung der Sone/Barks abhängig von den Barks für die Frequenzbereichsdarstellung des Rauschsignals mit Hilfe eines Lautstärke-Berechnungsverfahrens nach ISO 532B;
das Ermitteln (410) einer Gesamtlautstärke für das Rauschsignal und einer Lautstärke in mindestens einem kritischen Band für das Rauschsignal gestützt auf die Verteilung der Sone/Barks abhängig von den Barks, wobei das Lautstärkeprofil die Gesamtlautstärke des Rauschsignals und die Lautstärke in mindestens einem kritischen Band umfasst; und
das Erzeugen (310) eines Benachrichtigungssignals abhängig von der Klangmetrik.

2. Verfahren nach Anspruch 1, wobei das Erzeugen (310) des Benachrichtigungssignals umfasst:
das Erzeugen des Benachrichtigungssignals mit einer spektralen Zusammensetzung, die auf der Klangmetrik beruht.

3. Verfahren nach Anspruch 1, wobei das Erzeugen (310) des Benachrichtigungssignals umfasst:
das Ermitteln (600) eines Leistungswerts für das Benachrichtigungssignal abhängig vom Lautstärkeprofil für das Rauschsignal;
das Ermitteln (605) einer Übertragungsfunktion für ein Benachrichtigungssignal-Übertragungsfilter abhängig vom Lautstärkeprofil für das Rauschsignal; und
das Übertragen (610) des Benachrichtigungssignals bei dem Leistungswert mit Hilfe des Benachrichtigungssignal-Übertragungsfilters.

4. Verfahren nach Anspruch 3, wobei das Ermitteln (605) der Übertragungsfunktion für das Benachrichtigungssignal-Übertragungsfilter umfasst:
das Auswählen von Koeffizienten für das Benachrichtigungssignal-Übertragungsfilter.

5. Verfahren nach Anspruch 1, wobei die Klangmetrik ein Lautstärkeprofil und/oder ein Schärfeprofil umfasst.

6. Verfahren nach Anspruch 1, zudem umfassend:
das Empfangen eines eingehenden Kommunikationsvorgangs und/oder geplanten Ereignisses an der elektronischen Vorrichtung,
wobei das Empfangen (300) des Rauschsignals das Empfangen des Rauschsignals als Reaktion auf den Empfang des eingehenden Kommunikationsvorgangs umfasst.

7. Verfahren nach Anspruch 1, zudem umfassend:
das Empfangen eines eingehenden Kommunikationsvorgangs an der elektronischen Vorrichtung nach dem Empfang des Rauschsignals und das Erzeugen der Klangmetrik für das Rauschsignal,
wobei das Erzeugen (310) des Benachrichtigungssignals das Erzeugen des Benachrichtigungssignals umfasst, das die spektrale Zusammensetzung hat, die von der Klangmetrik abhängt, und zwar als Reaktion auf den Empfang des eingehenden Kommunikationsvorgangs.

8. Verfahren nach Anspruch 1, wobei die elektronische Vorrichtung ein mobiles Endgerät ist.

9. Verfahren zum Betreiben einer elektronischen Vorrichtung, umfassend:
das Bereitstellen mehrerer Benachrichtigungsprofile, wobei jedes Benachrichtigungsprofil so erzeugt wird, dass es eine spektrale Zusammensetzung hat, die von einer Rauschsignal-Klangmetrik abhängt, die einer Umgebung mit einem Umgebungsrauschen zugeordnet ist;
das Empfangen einer Benutzerauswahl eines Benachrichtigungsprofils aus der Anzahl Benachrichtigungsprofile; und
das Erzeugen eines Benachrichtigungssignals, das von dem gewählten Benachrichtigungsprofil der Anzahl Benachrichtigungsprofile abhängt.

10. Verfahren nach Anspruch 9, wobei das Erzeugen des Benachrichtigungssignals das Erzeugen des Benachrichtigungssignals mit einer spektralen Zusammensetzung umfasst, die vom gewählten Benachrichtigungsprofil der Anzahl Benachrichtigungsprofile abhängt.

11. Verfahren nach Anspruch 9, wobei das Erzeugen des Benachrichtigungssignals enthält:
das Ermitteln eines Leistungswerts für das Benachrichtigungssignal abhängig vom gewählten Benachrichtigungsprofil der Anzahl Benachrichtigungsprofile für das Rauschsignal;
das Ermitteln einer Übertragungsfunktion für ein Benachrichtigungssignal-Übertragungsfilter für das gewählte Benachrichtigungsprofil der Anzahl Benachrichtigungsprofile für das Rauschsignal; und
das Übertragen des Benachrichtigungssignals bei dem Leistungswert mit Hilfe des Benachrichtigungssignal-Übertragungsfilters.

12. Verfahren zum Betreiben einer elektronischen Vorrichtung, umfassend:
das Bereitstellen mehrerer Benachrichtigungsprofile; und daraufhin
das Empfangen (300) eines Rauschsignals;
das Wählen eines der Benachrichtigungsprofile der Anzahl Benachrichtigungsprofile als Reaktion auf den Empfang des Rauschsignals; und
das Erzeugen eines Benachrichtigungssignals, das von dem gewählten Benachrichtigungsprofil der Anzahl Benachrichtigungsprofile abhängt.

13. Verfahren nach Anspruch 12, wobei das Erzeugen des Benachrichtigungssignals das Erzeugen des Benachrichtigungssignals mit einer spektralen Zusammensetzung umfasst, die von gewählten Benachrichtigungsprofil der Anzahl Benachrichtigungsprofile abhängt.

14. Verfahren nach Anspruch 12, wobei das Erzeugen des Benachrichtigungssignals umfasst:
das Ermitteln eines Leistungswerts für das Benachrichtigungssignal abhängig vom gewählten Benachrichtigungsprofil der Anzahl Benachrichtigungsprofile für das Rauschsignal;
das Ermitteln einer Übertragungsfunktion für ein Benachrichtigungssignal-Übertragungsfilter für das gewählte Benachrichtigungsprofil der Anzahl Benachrichtigungsprofile für das Rauschsignal; und
das Übertragen des Benachrichtigungssignals bei dem Leistungswert mit Hilfe des Benachrichtigungssignal-Übertragungsfilters.

15. Elektronische Vorrichtung (100), umfassend:
einen Empfänger (105;250), der dafür konfiguriert ist, ein Rauschsignal zu empfangen;
**dadurch gekennzeichnet, dass** die elektronische Vorrichtung ferner umfasst:
ein Fouriertransformationsmodul (210), das dafür konfiguriert ist, eine Frequenzbereichsdarstellung des Rauschsignals zu gewinnen;
einen Klangmetrikprozessor (215), der dafür konfiguriert ist, eine Klangmetrik für das Rauschsignal zu erzeugen, wobei die Klangmetrik ein Lautstärkeprofil ist, und der Klangmetrikprozessor (215) ferner dafür konfiguriert ist, eine Verteilung der Sone/Barks abhängig von den Barks für die Frequenzbereichsdarstellung des Rauschsignals mit Hilfe eines Lautstärke-Berechnungsverfahrens nach ISO 532B zu berechnen und eine Gesamtlautstärke für das Rauschsignal und eine Lautstärke in mindestens einem kritischen Band für das Rauschsignal gestützt auf die Verteilung der Sone/Barks abhängig von den Barks zu ermitteln, wobei das Lautstärkeprofil die Gesamtlautstärke des Rauschsignals enthält und die Lautstärke in mindestens einem kritischen Band;
einen Benachrichtigungsgenerator (225), der dafür konfiguriert ist, ein Benachrichtigungssignal zu erzeugen, das von der Klangmetrik abhängt.

16. Elektronische Vorrichtung (100) nach Anspruch 15, wobei der Benachrichtigungsgenerator (225) zudem dafür konfiguriert ist, ein Benachrichtigungssignal zu erzeugen, das eine spektrale Zusammensetzung hat, die von der Klangmetrik abhängt.

17. Elektronische Vorrichtung (100) nach Anspruch 15, wobei der Benachrichtigungsgenerator (225) zudem ein Benachrichtigungssignal-Übertragungsfilter (235) enthält, und wobei der Benachrichtigungsgenerator (225) zudem dafür konfiguriert ist, einen Leistungswert für das Benachrichtigungssignal abhängig vom Lautstärkeprofil für das Rauschsignal zu bestimmen, eine Übertragungsfunktion für das Benachrichtigungssignal-Übertragungsfilter abhängig vom Lautstärkeprofil für das Rauschsignal zu bestimmen, und das Benachrichtigungssignal mit dem Leistungswert mit Hilfe des Benachrichtigungssignal-Übertragungsfilters zu übertragen.

18. Elektronische Vorrichtung (100) nach Anspruch 17, wobei der Benachrichtigungsgenerator (225) zudem dafür konfiguriert ist, Koeffizienten für das Benachrichtigungssignal-Übertragungsfilter zu wählen.

19. Elektronische Vorrichtung (100) nach Anspruch 15, wobei die Klangmetrik ein Lautstärkeprofil und ein Schärfeprofil umfasst.

20. Elektronische Vorrichtung (100) nach Anspruch 15, wobei die elektronische Vorrichtung (100) ein mobiles Endgerät ist.

21. Elektronische Vorrichtung (100), umfassend:
Mittel (220) zum Bereitstellen mehrerer Benachrichtigungsprofile (230), wobei jedes Benachrichtigungsprofil so erzeugt wird, dass es eine spektrale Zusammensetzung hat, die von einer Rauschsignal-Klangmetrik abhängt, die einer Umgebung mit einem Umgebungsrauschen zugeordnet ist;
Mittel (115) zum Empfangen einer Benutzerauswahl eines Benachrichtigungsprofils aus der Anzahl Benachrichtigungsprofile (230); und
Mittel (135) zum Erzeugen eines Benachrichtigungssignals, das von dem gewählten Benachrichtigungsprofil der Anzahl Benachrichtigungsprofile (230) abhängt.

22. Elektronische Vorrichtung (100), umfassend:
Mittel (220) zum Bereitstellen mehrerer Benachrichtigungsprofile (230);
Mittel (105, 250) zum Empfangen eines Rauschsignals;
Mittel (135) zum Wählen eines Benachrichtigungsprofils der Anzahl Benachrichtigungsprofile (230) abhängig vom Empfang des Rauschsignals; und
Mittel (135) zum Erzeugen eines Benachrichtigungssignals, das von dem gewählten Benachrichtigungsprofil der Anzahl Benachrichtigungsprofile (230) abhängt.

23. Computerprogrammprodukt zum Betreiben einer elektronischen Vorrichtung, umfassend:
ein computerlesbares Speichermedium, in dem computerlesbarer Programmcode verkörpert ist, wobei der computerlesbare Programmcode umfasst:
computerlesbaren Programmcode, der dafür konfiguriert ist, ein Rauschsignal zu empfangen;
**dadurch gekennzeichnet, dass** der computerlesbare Programmcode weiterhin enthält:
computerlesbaren Programmcode, der dafür konfiguriert ist, das Rauschsignal einer Fouriertransformation zu unterziehen, damit man eine Frequenzbereichsdarstellung des Rauschsignals erhält;
computerlesbaren Programmcode, der dafür konfiguriert ist, eine Klangmetrik für das Rauschsignal zu erzeugen, wobei die Klangmetrik ein Lautstärkeprofil ist;
computerlesbaren Programmcode, der dafür konfiguriert ist, eine Verteilung der Sone/Barks abhängig von den Barks für die Frequenzbereichsdarstellung des Rauschsignals mit Hilfe eines Lautstärke-Berechnungsverfahrens nach ISO 532B zu berechnen;
computerlesbaren Programmcode, der dafür konfiguriert ist, eine Gesamtlautstärke für das Rauschsignal und eine Lautstärke in mindestens einem kritischen Band für das Rauschsignal gestützt auf die Verteilung der Sone/Barks abhängig von den Barks zu ermitteln, wobei das Lautstärkeprofil die Gesamtlautstärke des Rauschsignals und die Lautstärke in mindestens einem kritischen Band umfasst; und
computerlesbaren Programmcode, der dafür konfiguriert ist, ein Benachrichtigungssignal abhängig von der Klangmetrik zu erzeugen.

24. Computerprogrammprodukt nach Anspruch 23, wobei der computerlesbare Programmcode, der zum Erzeugen des Benachrichtigungssignals konfiguriert ist, umfasst:
einen computerlesbaren Programmcode, der dafür konfiguriert ist, das Benachrichtigungssignal zu erzeugen, das eine spektrale Zusammensetzung hat, die von der Klangmetrik abhängt.

25. Computerprogrammprodukt nach Anspruch 23, wobei der computerlesbare Programmcode, der zum Erzeugen des Benachrichtigungssignals konfiguriert ist, umfasst:
einen computerlesbaren Programmcode, der dafür konfiguriert ist, einen Leistungswert für das Benachrichtigungssignal abhängig vom Lautstärkeprofil für das Rauschsignal zu bestimmen;
einen computerlesbaren Programmcode, der dafür konfiguriert ist, eine Übertragungsfunktion für ein Benachrichtigungssignal-Übertragungsfilter abhängig vom Lautstärkeprofil für das Rauschsignal zu bestimmen; und
einen computerlesbaren Programmcode, der dafür konfiguriert ist, das Benachrichtigungssignal mit dem Leistungswert mit Hilfe des Benachrichtigungssignal-Übertragungsfilters zu übertragen.

26. Computerprogrammprodukt zum Betreiben einer elektronischen Vorrichtung, umfassend:
ein computerlesbares Speichermedium, in dem computerlesbarer Programmcode verkörpert ist, wobei der computerlesbare Programmcode umfasst:
computerlesbaren Programmcode, der dafür konfiguriert ist, mehrere Benachrichtigungsprofile bereitzustellen, wobei jedes Benachrichtigungsprofil so erzeugt wird, dass es eine spektrale Zusammensetzung hat, die von einer Rauschsignal-Klangmetrik abhängt, die einer Umgebung mit einem Umgebungsrauschen zugeordnet ist;
computerlesbaren Programmcode, der dafür konfiguriert ist, eine Benutzerauswahl eines Benachrichtigungsprofils aus der Anzahl Benachrichtigungsprofile zu empfangen; und
computerlesbaren Programmcode, der dafür konfiguriert ist, ein Benachrichtigungssignal zu erzeugen, das von dem gewählten Benachrichtigungsprofil der Anzahl Benachrichtigungsprofile abhängt.

27. Computerprogrammprodukt zum Betreiben einer elektronischen Vorrichtung, umfassend:
ein computerlesbares Speichermedium, in dem computerlesbarer Programmcode verkörpert ist, wobei der computerlesbare Programmcode umfasst:
computerlesbaren Programmcode, der dafür konfiguriert ist, mehrere Benachrichtigungsprofile bereitzustellen;
computerlesbaren Programmcode, der dafür konfiguriert ist, ein Rauschsignal zu empfangen;
computerlesbaren Programmcode, der dafür konfiguriert ist, ein Benachrichtigungsprofil aus der Anzahl Benachrichtigungsprofile abhängig vom Empfang des Rauschsignals zu wählen; und
computerlesbaren Programmcode, der dafür konfiguriert ist, ein Benachrichtigungssignal zu erzeugen, das von dem gewählten Benachrichtigungsprofil der Anzahl Benachrichtigungsprofile abhängt.

## Revendications

1. Procédé de fonctionnement d'un dispositif électronique, comprenant l'étape consistant à:
recevoir un signal de bruit (300);
**caractérisé en ce que** le procédé comprend les étapes consistant à:
effectuer une transformée de Fourier sur le signal de bruit pour obtenir une représentation du domaine de fréquences du signal de bruit (400);
générer une métrique sonore pour le signal de bruit, la métrique sonore étant un profil de sonie (305);
calculer une distribution de sones/bark par rapport aux barks pour la représentation du domaine de fréquences du signal de bruit à l'aide d'un procédé de calcul de sonie ISO 532B (405);
déterminer une sonie totale pour le signal de bruit et une sonie dans au moins une bande critique pour le signal de bruit sur la base de la distribution de sones/bark par rapport aux barks, le profil de sonie comprenant la sonie totale du signal de bruit et la sonie dans au moins une bande critique (410); et
générer un signal d'alerte sur la base de la métrique sonore (310).

2. Procédé selon la revendication 1, dans lequel la génération du signal d'alerte (310) comprend l'étape consistant à:
générer le signal d'alerte ayant une composition spectrale qui est basée sur la métrique sonore.

3. Procédé selon la revendication 1, dans lequel la génération du signal d'alerte (310) comprend les étapes consistant à:
déterminer une valeur de puissance pour le signal d'alerte sur la base du profil de sonie pour le signal de bruit (600);
déterminer une fonction de transfert pour un filtre d'émission de signal d'alerte sur la base du profil de sonie pour le signal de bruit (605); et
transmettre le signal d'alerte à la valeur de puissance à l'aide du filtre d'émission de signal d'alerte (610).

4. Procédé selon la revendication 3, dans lequel la détermination de la fonction de transfert pour le filtre d'émission de signal d'alerte (605) comprend l'étape consistant à:
sélectionner des coefficients pour le filtre d'émission de signal d'alerte.

5. Procédé selon la revendication 1, dans lequel la métrique sonore comprend un profil de sonie et/ou un profil de netteté.

6. Procédé selon la revendication 1, comprenant en outre l'étape consistant à:
recevoir une communication entrante et/ou un événement planifié au niveau du dispositif électronique; et
dans lequel la réception du signal de bruit (300) comprend de recevoir le signal de bruit en réponse à la réception de la communication entrante.

7. Procédé selon la revendication 1, comprenant en outre l'étape consistant à:
recevoir une communication entrante au niveau du dispositif électronique après réception du signal de bruit et générer la métrique sonore pour le signal de bruit; et
dans lequel la génération du signal d'alerte (310) comprend de générer le signal d'alerte ayant la composition spectrale qui est basée sur la métrique sonore en réponse à la réception de la communication entrante.

8. Procédé selon la revendication 1, dans lequel le dispositif électronique est un terminal mobile.

9. Procédé de fonctionnement d'un dispositif électronique, comprenant les étapes consistant à:
délivrer une pluralité de profils d'alerte, chacun des profils d'alerte étant généré pour avoir une composition spectrale basée sur une métrique sonore de signal de bruit associée à un environnement sonore ambiant;
recevoir une sélection d'utilisateur d'un profil d'alerte de la pluralité de profils d'alerte; et
générer un signal d'alerte qui est basé sur le profil d'alerte sélectionné de la pluralité de profils d'alerte.

10. Procédé selon la revendication 9, dans lequel la génération du signal d'alerte comprend de générer le signal d'alerte ayant une composition spectrale qui est basée sur le profil d'alerte sélectionné de la pluralité de profils d'alerte.

11. Procédé selon la revendication 9, dans lequel la génération du signal d'alerte comprend les étapes consistant à:
déterminer une valeur de puissance pour le signal d'alerte sur la base du profil d'alerte sélectionné de la pluralité de profils d'alerte pour le signal de bruit;
déterminer une fonction de transfert pour un filtre d'émission de signal d'alerte du profil d'alerte sélectionné de la pluralité de profils d'alerte pour le signal de bruit; et
transmettre le signal d'alerte à la valeur de puissance à l'aide du filtre d'émission de signal d'alerte.

12. Procédé de fonctionnement d'un dispositif électronique, comprenant les étapes consistant à:
délivrer une pluralité de profils d'alerte; puis recevoir un signal de bruit (300);
sélectionner un profil d'alerte parmi la pluralité de profils d'alerte en réponse à la réception du signal de bruit; et
générer un signal d'alerte qui est basé sur le profil d'alerte sélectionné de la pluralité de profils d'alerte.

13. Procédé selon la revendication 12, dans lequel la génération du signal d'alerte comprend de générer le signal d'alerte ayant une composition spectrale qui est basée sur le profil d'alerte sélectionné de la pluralité de profils d'alerte.

14. Procédé selon la revendication 12, dans lequel la génération du signal d'alerte comprend les étapes consistant à:
déterminer une valeur de puissance pour le signal d'alerte sur la base du profil d'alerte sélectionné de la pluralité de profils d'alerte pour le signal de bruit;
déterminer une fonction de transfert pour un filtre d'émission de signal d'alerte du profil d'alerte sélectionné de la pluralité de profils d'alerte pour le signal de bruit; et
transmettre le signal d'alerte à la valeur de puissance à l'aide du filtre d'émission de signal d'alerte.

15. Dispositif électronique (100) comprenant:
un récepteur (105; 250) qui est configuré pour recevoir un signal de bruit;
**caractérisé en ce que** le dispositif électronique comprend en outre:
un module de transformée de Fourier (210) qui est configuré pour obtenir une représentation du domaine de fréquences du signal de bruit;
un processeur de métrique sonore (215) qui est configuré pour générer une métrique sonore pour le signal de bruit, la métrique sonore étant un profil de sonie, le processeur de métrique sonore (215) étant en outre configuré pour calculer une distribution de sones/bark par rapport aux barks pour la représentation du domaine de fréquences du signal de bruit à l'aide d'un procédé de calcul de sonie ISO 532B et pour déterminer une sonie totale pour le signal de bruit et une sonie dans au moins une bande critique pour le signal de bruit sur la base de la distribution de sones/bark par rapport aux barks, le profil de sonie comprenant la sonie totale du signal de bruit et la sonie dans au moins une bande critique;
un générateur d'alerte (225) qui est configuré pour générer un signal d'alerte sur la base de la métrique sonore.

16. Dispositif électronique (100) selon la revendication 15, dans lequel le générateur d'alerte (225) est en outre configuré pour générer un signal d'alerte ayant une composition spectrale qui est basée sur la métrique sonore.

17. Dispositif électronique (100) selon la revendication 15, dans lequel le générateur d'alerte (225) comprend en outre un filtre d'émission de signal d'alerte (235) et dans lequel le générateur d'alerte (225) est en outre configuré pour déterminer une valeur de puissance pour le signal d'alerte sur la base du profil de sonie pour le signal de bruit, déterminer une fonction de transfert pour un filtre d'émission de signal d'alerte sur la base du profil de sonie pour le signal de bruit, et transmettre le signal d'alerte à la valeur de puissance à l'aide du filtre d'émission de signal d'alerte.

18. Dispositif électronique (100) selon la revendication 17, dans lequel le générateur d'alerte (225) est en outre configuré pour sélectionner des coefficients pour le filtre d'émission de signal d'alerte.

19. Dispositif électronique (100) selon la revendication 15, dans lequel la métrique sonore comprend un profil de sonie et un profil de netteté.

20. Dispositif électronique (100) selon la revendication 15, dans lequel le dispositif électronique (100) est un terminal mobile.

21. Dispositif électronique (100) comprenant:
un moyen (220) pour délivrer une pluralité de profils d'alerte (230), chacun des profils d'alerte étant généré pour avoir une composition spectrale basée sur une métrique sonore de signal de bruit associée à un environnement sonore ambiant;
un moyen (115) pour recevoir une sélection d'utilisateur d'un profil d'alerte de la pluralité de profils d'alerte (230); et
un moyen (135) pour générer un signal d'alerte qui est basé sur le profil d'alerte sélectionné de la pluralité de profils d'alerte (230).

22. Dispositif électronique (100) comprenant:
un moyen (220) pour délivrer une pluralité de profils d'alerte (230);
un moyen (105, 250) pour recevoir un signal de bruit;
un moyen (135) pour sélectionner un profil d'alerte parmi la pluralité de profils d'alerte (230) en réponse à la réception du signal de bruit; et
un moyen (135) pour générer un signal d'alerte qui est basé sur le profil d'alerte sélectionné de la pluralité de profils d'alerte (230).

23. Produit programme informatique pour faire fonctionner un dispositif électronique, comprenant:
un support de stockage lisible par un ordinateur contenant un code de programme lisible par un ordinateur, le code de programme lisible par un ordinateur comprenant:
un code de programme lisible par un ordinateur configuré pour recevoir un signal de bruit;
**caractérisé en ce que** le code de programme lisible par un ordinateur comprend en outre:
un code de programme lisible par un ordinateur configuré pour effectuer une transformée de Fourier sur le signal de bruit pour obtenir une représentation du domaine de fréquences du signal de bruit;
un code de programme lisible par un ordinateur configuré pour générer une métrique sonore pour le signal de bruit, la métrique sonore étant un profil de sonie;
un code de programme lisible par un ordinateur configuré pour calculer une distribution de sones/bark par rapport aux barks pour la représentation du domaine de fréquences du signal de bruit à l'aide d'un procédé de calcul de sonie ISO 532B;
un code de programme lisible par un ordinateur configuré pour déterminer une sonie totale pour le signal de bruit et une sonie dans au moins une bande critique pour le signal de bruit sur la base de la distribution de sones/bark par rapport aux barks, le profil de sonie comprenant la sonie totale du signal de bruit et la sonie dans au moins une bande critique; et
un code de programme lisible par un ordinateur configuré pour générer un signal d'alerte sur la base de la métrique sonore.

24. Produit programme informatique selon la revendication 23, dans lequel le code de programme lisible par un ordinateur configuré pour générer le signal d'alerte comprend:
un code de programme lisible par un ordinateur configuré pour générer le signal d'alerte ayant une composition spectrale qui est basée sur la métrique sonore.

25. Produit programme informatique selon la revendication 23, dans lequel le code de programme lisible par un ordinateur configuré pour générer le signal d'alerte comprend:
un code de programme lisible par un ordinateur configuré pour déterminer une valeur de puissance pour le signal d'alerte sur la base du profil de sonie pour le signal de bruit;
un code de programme lisible par un ordinateur configuré pour déterminer une fonction de transfert pour un filtre d'émission de signal d'alerte sur la base du profil de sonie pour le signal de bruit; et
un code de programme lisible par un ordinateur configuré pour transmettre le signal d'alerte à la valeur de puissance à l'aide du filtre d'émission de signal d'alerte.

26. Produit programme informatique pour faire fonctionner un dispositif électronique, comprenant:
un support de stockage lisible par un ordinateur contenant un code de programme lisible par un ordinateur, le code de programme lisible par un ordinateur comprenant:
un code de programme lisible par un ordinateur configuré pour délivrer une pluralité de profils d'alerte, chacun des profils d'alerte étant généré pour avoir une composition spectrale basée sur une métrique sonore de signal de bruit associée à un environnement sonore ambiant;
un code de programme lisible par un ordinateur configuré pour recevoir une sélection d'utilisateur d'un profil d'alerte de la pluralité de profils d'alerte; et
un code de programme lisible par un ordinateur configuré pour générer un signal d'alerte qui est basé sur le profil d'alerte sélectionné de la pluralité de profils d'alerte.

27. Produit programme informatique pour faire fonctionner un dispositif électronique, comprenant:
un support de stockage lisible par un ordinateur contenant un code de programme lisible par un ordinateur, le code de programme lisible par un ordinateur comprenant:
un code de programme lisible par un ordinateur configuré pour délivrer une pluralité de profils d'alerte;
un code de programme lisible par un ordinateur configuré pour recevoir un signal de bruit;
un code de programme lisible par un ordinateur configuré pour sélectionner un profil d'alerte parmi la pluralité de profils d'alerte en réponse à la réception du signal de bruit; et
un code de programme lisible par un ordinateur configuré pour générer un signal d'alerte qui est basé sur le profil d'alerte sélectionné de la pluralité de profils d'alerte.
